# EUROPEAN PATENT APPLICATION

(11) **EP 0 579 841 A1**
(43) Date of publication of application: **26.01.1994**
(21) Application number: 93903298.3
(22) Date of filing: 03.02.1993
(51) Int. Cl.: G05B 19/407, G05B 19/405

(54) **METHOD OF CREATING NC PROGRAM FOR CUTTING CORNER**

(30) Priority: 07.02.1992 JP 22811/92
(71) Applicant: FANUC LTD., Minamitsuru-gun, Yamanashi 401-05 (JP)
(72) Inventor: SEKI, Masaki 5-17-23, Kugayama, Tokyo 168 (JP); TAKEGAHARA, Takashi 256-2, Nishiterakata-machi, Tokyo 192-01 (JP); HAYANAGI, Shizuaki Fanuc Dai-3 Vira-karamatsu, Yamanashi 401-05 (JP); HIROSE, Noboru Fanuc Dai-3 Vira-karamatsu, Yamanashi 401-05 (JP)
(74) Representative: Blumbach, Kramer & Partner
(86) International application number: JP9300125
(87) International publication number: WO9316422

(57) **Abstract**

A method of creating an NC program for cutting corners, in which the rotational speed of the main shaft can be specified for each corner to be cut in an interactive mode by a CAD/CAM system. The method comprises a first step (S1) of checking the completion of specifying the corners to be cut; a second step (S2) of selecting either of an individual specification and a batch specification when the specifying of all the corners is not complete; a third step (S3) of instructing whether the rotational speed of the main shaft is specified or not; a fourth step (S4) in which when the rotational speed of the main shaft is not specified, corners are specified by a selected specification method, i.e., in the case of the individual specification, the individual selection or a range selection is specified, and in the case of the batch specification, the angular range etc. are specified; a fifth step (S5) in which as the result of the third step S3, when the rotational speed is to be specified, a method of specifying the rotational speed of the spindle is selected; a sixth step (S6) of inputting the rotational speeds of the main shaft or the coefficients, etc. of the computational equations by which the rotational speed of the main shaft is computed according to the selected method for specifying the rotational speed; and a seventh step (S7) of storing in a memory the data of the corners where the rotational speeds are altered and the data of the rotational speeds.

## Description

### TECHNICAL FIELD

The present invention relates to a method for creating an NC program by means of CAD/CAM system, more particularly a method for designating the spindle speed setting for the corner machining of a work upon fine machining (profile machining) after rough machining (pocket machining). The corner, in here, means an segment between two segments in a collection of minute segments, for example, when a corner is continually machined, by linear interpolation machining, circular interpolation machining, and linear interpolation machining, in order, then the circular interpolation machining segment is regarded as the corner.

### BACKGROUND ART

In order to finely machine corner sections of a work, in other words, to neither overcut nor to leave uncut portions, feed speed of a cutter is usually changed when moving the cutter from a straight line section to a corner section or just machining corner sections in prior arts. However, the machining by changing the feed speed is not sufficient to obtain good results in fine corner machining.

In this case, it has been known that good results in fine corner machining can be obtained by changing the spindle speed. Therefore, two methods are considered to realize that. A first method is to manually change the spindle speed while machining the corner section in accordance with a machining program, a second method is to execute a machining program that is previously created so as to change the spindle speed while the corner machining.

However, the first method by manually change the setting of the spindle speed during machining the corner section relies on operator's memory. Therefore, there are problems that the method is not reliable and it creates a lack of repeatability of corner machining because operators may forget to change the spindle speed setting when required or operators may make a mistake in the time of changing the spindle speed.

On the other hand, in the second method, changing the spindle speed upon the corner machining in a machining program which is previously created, there are two methods of creating the machining program by means of an automatic programming system or by using interactive CAD/CAM system which can input using a CRT display. The present invention relates to the latter method by which operators can easily edit the program, but there has been a problem in this method up to the present time. That is, the latter has no function to set the spindle speed while the corner machining when creating a machining program.

### DISCLOSURE OF THE INVENTION

Therefore, in the light of the above mentioned problems, it is an object of the present invention to provide a method for creating an NC program, by means of an interactive CAD/CAM system, which can designate the spindle speed setting for corner machining.

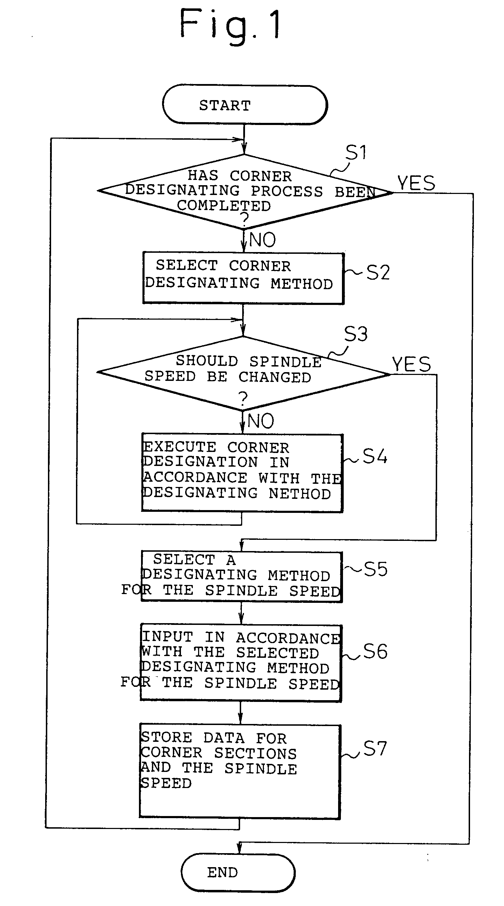

Fig. 1 is a flow chart of the routine for the corner designation and spindle speed setting. In the drawing, the number after S indicates the step number.

In order to solve the above mentioned problems, the method for creating an NC program for corner machining by means of interactive CAD/CAM system includes the following steps in a corner designating process.

STEP1 (S1): Ask the operator whether or not a spindle speed should be changed during corner machining (corner means an segment between two segments in a collection of minute segments), end the corner designating process if the operator determines that the corner designating process has been completed, go to the step 2 if not.

STEP2 (S2): Select a method for the corner designation, i.e., select an individual designating method or a general designating method, then go to the step 3.

STEP3 (S3): At the corner selection setting time, ask the operator whether or not the spindle speed should be changed. Go to the step 4 if the operator determines not to change the spindle speed, go to the step 5 if the operator decides to change the spindle speed.

STEP4 (S4): Execute the corner designation in accordance with the designated method selected by the operator. Namely, designate an individual selection or a range selection in case of the individual designation, execute the collective designation such as angle range in case of the collective designation.

STEP5 (S5): Select a method for designating the spindle speed setting, then go to step 6.

STEP6 (S6): Go to step 7 after inputting coefficients of equations or the like necessary for calculating the spindle speed data or the spindle speed itself in accordance with the selected method for designating the spindle speed setting.

STEP7 (S7): Store data for the corner sections where the spindle speed should be changed, and the spindle speed, into memory then return to step 1.

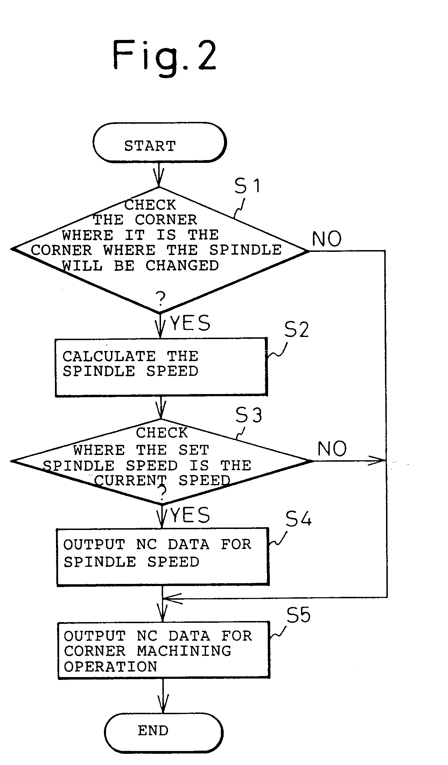

Fig. 2 is a flow chart of the NC data outputting routine at the corner machining time. In the drawing, the number after S indicates the step number. The method for creating an NC program for corner machining according to the present invention further includes the following steps that designate the spindle speed setting upon creating an NC program by means of an interactive CAD/CAM system.

STEP 1 : Check whether or not the corners to be machined will be the corners where the spindle speed will be changed, if so, go to step 2, if not, go to step 5.

STEP 2 : Calculate the spindle speed, then go to step 3.

STEP 3 : Check whether or not the setting spindle speed equals the current spindle speed, if so, go to step 5, if not, go to step 4.

STEP 4 : Output numerical control (NC) data for spindle rotation commands, then go to step 5.

STEP 5 : Output NC data for the corner machining operation and end the process.

The method for creating an NC program that machines a corner section includes the steps of, selecting either the individual designating method or the collective designating method for machining the corner where the spindle speed will be changed, designating an individual selection or a range of selections in case of the individual designating method, designating the collective designating method by a condition such as the angular range in case of the collective designating method, and designating the spindle speed directly or indirectly regardless of the individual designating method or the collective designating method, whereby proper designate of a plurality of corner sections for machining can be carried out by various kinds of setting methods for the spindle speed, depending on requirements.

### BRIEF DESCRIPTION OF DRAWINGS

Fig. 1 is a flow chart of the routine for the corner designation and spindle speed setting;
Fig. 2 is a flow chart of the NC data outputting routine at the corner machining time;
Fig. 3 shows a screen at the time of selecting a method for designating corners where the spindle speed will be changed according to the present invention;
Fig. 4 shows a screen at the time of selecting a method for selecting corners where the spindle speed will be changed in the case of individual designation;
Fig. 5 shows a screen defining a corner condition by an angle in case of collective designation; and
Fig. 6 shows a screen at the time of selecting a method for designating the spindle speed.

### BEST MODE FOR CARRYING OUT THE INVENTION

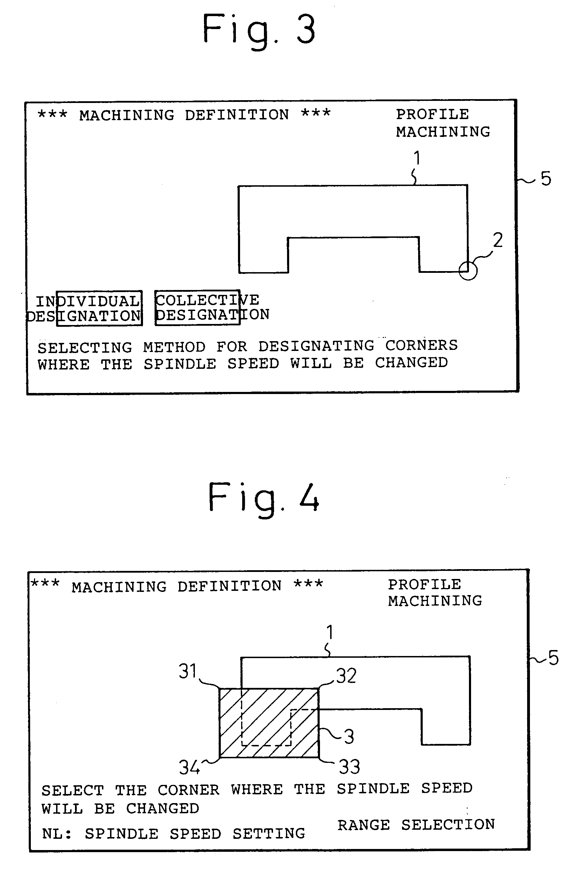

Fig. 3 shows a screen at the time of selecting a method for designating corners where the spindle speed will be changed according to the present invention. Fig. 3 indicates a CRT screen 5 that displays a work 1. The CRT screen 5 displays the screen at the time of selecting either the individual designating method that individually designates each machining section or the collective designating method that designates the whole work 1 area in a predetermined condition depending on requirements, for example, the angular range of corners, when setting the spindle speed at the corner machining time.

Fig. 4 shows a screen at the time of selecting a method for selecting corners where the spindle speed will be changed in the case of the individual designating method. There are two options, an individual selecting method, and a range selecting method, in this method for selecting corners. In case of the individual selecting method, each corner is selected with a pointing device (light pen, a mouse, or the like) at each of corners in the work 1. In case of the range selecting method, corners in a rectangle in the work are selected at a time by selecting the rectangle, e.g., a rectangle 3 in the work 1 shown with oblique lines, which includes some corners in the rectangle which are designated (in a same condition). The rectangular section 3 can be selected, for example, by selecting two opposite points 31 and 33 at first, then selecting another two opposite points 32 and 34.

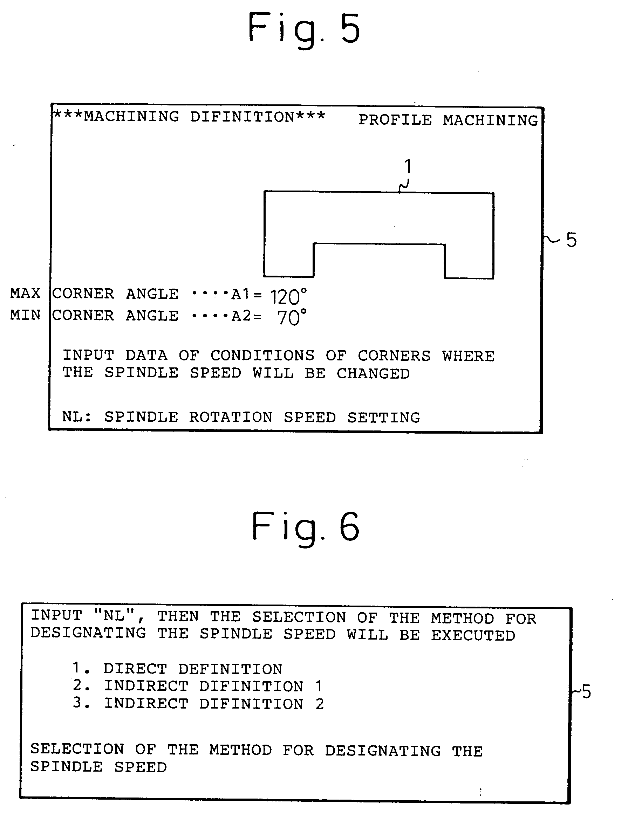

Fig. 5 shows a screen defining corner conditions by angle in case of collective designation. This drawing shows that, for example, by designating the maximum corner angle A1= 120° and the minimum corner angle A2 = 70 ° of corners where the spindle speed should be changed, the corners in the angular range of 70° to 120 ° can be machined in the same spindle speed. There are other collective designating methods depending on requirements.

Fig. 6 shows a screen at the time of selecting a method for designating the spindle speed. This designation is independent from the individual designating method or the collective designating method. This designation includes a direct designating method that designates the spindle speed directly and an indirect designating method that indirectly designates the spindle speed by designating coefficients or the like of equations when calculating the equations. There are a plenty of kinds of indirect designating methods which operators can select. These designating methods can be selected depending on requirements.

Fig. 1 is a flow chart of the routine for the corner designation and spindle speed setting. In the drawing, the number after S indicates the step number.

The method for creating an NC program for corner machining by means of interactive CAD/CAM system that executes the following steps of the corner designating routine.

STEP1 (S1): Ask the operator whether or not a spindle speed should be changed upon corner machining (corner means an segment between two segments in a collection of minute segments), end the corner designating process if the operator determines that the corner designating process has been completed, and go to the step 2 if not.

STEP2 (S2): Select the corner designating method, i.e., select an individual designating method or a collective designating method as explained with reference to Fig. 3, then go to the step 3.

STEP3 (S3): At each corner selection setting time, ask the operator whether or not the spindle speed should be changed, go to the step 4 if the operator elects not to change the spindle speed, go to the step 5 if the operator elects to change the spindle speed.

STEP4 (S4): Execute the corner designating method in accordance with the designating method selected by the operator. Namely, designate the individual selection or the range selection in case of the individual designation as explained with Fig. 4, execute the collective designation such as angular range in case of the collective designation as explained with Fig. 5.

STEP5 (S5): Select a designating method for the spindle speed setting, then go to step 5.

STEP6 (S6): Go to step 7 after inputting spindle speed data, or coefficients or the like for equations for calculating the spindle speed, in accordance with the selected designating method of spindle speed setting as explained with Fig. 6.--

STEP7 (S7): Store data for the corner sections where the spindle speed will be changed and the spindle speed thereof into memory, then return to step 1.

Fig. 2 is a flow chart of the NC data outputting routine at the corner machining time. The method for creating an NC program for corner machining according to the present invention includes the following steps for executing a routine for the spindle speed setting method upon creating the NC program by means of an interactive CAD/CAM system.

STEP 1 : Check whether or not the machining corners are where the spindle speed will be changed, if so, go to the step 2, if not, go to the step 5.

STEP 2 : Calculate the spindle speed, then go to the step 3.

STEP 3 : Check whether or not the setting spindle speed equals the current spindle speed, if it is not, go to the step 4, if it is, go to the step 5.

STEP 4 : Output numerical control (NC) data for spindle rotation commands, then go to the step 5.

STEP 5 : Output NC data for the corner machining operations and end the routine.

As heretofore explained, according to the method for creating an NC program for corner machining of the present invention, the spindle speed can be set for each corner, therefore optimum and fine corner machining can be realized. Furthermore, according to the method of the present invention, the spindle speed for corner machining can be freely set by means of the interactive CAD/CAM system referring to the machine drawing of the work, therefore the operation becomes easy.

## Claims

1. A method for creating an NC program for corner machining by means of an interactive CAD/CAM system characterized in that it comprises a routine for corner machining comprising :
step 1 for checking whether the corner designating process for said corner machining has been completed or not, and ending if said corner designating process has been completed;
step 2 for selecting an individual designating method or a collective designating method if said corner designating process for said corner machining has not been completed;
step 3 for determining whether or not the spindle speed should be changed;
step 4 for executing the corner designating method in accordance with the designating method selected by the operator, namely, designating an individual selection or a range selection in case of the individual designation, or executing the collective designation such as angular range in case of the collective designation when it is determined that said spindle speed should be constant as a result of said step 3;
step 5 for selecting a designating method for the spindle speed setting when it is determined that said spindle speed should be changed as a result of said step 3;
step 6 inputting coefficients or the like for equations for calculating the spindle speed data or the spindle speed itself in accordance with the selected designating method for the spindle speed setting; and
step 7 for storing data for the corner sections where said spindle speed will be changed or said spindle speed into memory.

2. A method for creating an NC program for corner machining by means of an interactive CAD/CAM system characterized in that it comprises a routine for the spindle speed setting comprising:
step 1 for checking whether or not the machining corners are the corners where the spindle speed will be changed;
step 2 for calculating said spindle speed when it is determined that the spindle speed should be changed as a result of the check in said step 1;
step 3 for checking whether or not said setting spindle speed equals the current spindle speed;
step 4 for outputting numerical control (NC) data for spindle rotation commands when said setting spindle speed does not equal the current spindle speed as a result of said step 3;
step 5 for outputting NC data for corner machining operations when it is determined that said spindle speed should not be changed as a result of said step 4 or said step 1 or when said setting spindle speed equals to the current spindle speed as a result of said step 3.

3. A method for creating an NC program for corner machining as claimed in claim 1 or 2, referring to a machine drawing, wherein it further comprises the steps of,
individually designating said spindle speed at each corner for machining, and
collectively designating the constant spindle speed setting at corners in determined angular range.

4. A method as claimed in claim 3, wherein
said individual designating method comprises the steps of,
an individual selection step that selects the range of each corner by selecting each corner by means of a selecting device, and
a range selection step that selects the range of corners in a machine drawing by selecting two pairs of diagonal points consisting of at least a rectangle by means of a selecting device.

5. A method as claimed in claim 1, wherein
said step for setting said spindle speed comprises,
a direct designating step that directly sets said spindle speed, and
an indirect designating step that sets coefficients for equations obtained by calculating said spindle speed using said equations.
